# EUROPÄISCHE PATENTANMELDUNG

(11) **EP 0 998 090 A2**
(43) Veröffentlichungstag der Anmeldung: **03.05.2000**
(21) Anmeldenummer: 99108767.7
(22) Anmeldetag: 03.05.1999
(51) Int. Cl.: H04L 29/06

(54) **Verfahren zum Übertragen von Daten**

(30) Priorität: 06.05.1998 DE 19820222; 10.02.1999 DE 19905509
(71) Anmelder: SIEMENS AKTIENGESELLSCHAFT, 80333 München (DE)
(72) Erfinder: Zoernack, Alexander, 85716 Unterschleissheim (DE)

(57) **Zusammenfassung**

Die Erfindung betrifft ein Verfahren zum Übertragen von Daten zwischen Kommunikationsteilnehmern über ein Kommunikationsnetz, insbesondere ein paketvermittelndes Datennetz wie das Internet.
Ein Benutzer kann durch Verwendung einer der erfindungsgemäßen Lösungswege während der Benutzung eines Netzzuganges temporär einen Umgehungsweg verwenden. Weiterhin ist eine flexible Vergebührung für den Umgehungsweg möglich, welche von der Vergebührung des ersten Datenpfades unabhängig gesteuert wird.

## Beschreibung

Die Erfindung betrifft ein Verfahren zum Übertragen von Daten zwischen Kommunikationsteilnehmern über ein Kommunikationsnetz, insbesondere ein paketvermittelndes Datennetz wie das Internet. Dabei sind die Kommunikationsteilnehmer jeweils über einen Netzzugangspunkt (auch Point of Presence, POP genannt) mit dem Kommunikationsnetz verbunden.

Die Vergebührung erfolgt dabei über den Anbieter des Netzzugangspunktes, welcher dem Benutzer die Zugangsdienste zu dem Kommunikationsnetz nach verschiedenen Vergebührungsmodellen zur Verfügung stellen kann, zum Beispiel nach der Dauer des Netzzuganges oder den übertragenen Datenmengen.
Dem Benutzer fallen möglicherweise weitere Kosten für die Verbindung zum Netzzugangspunkt an, zum Beispiel wenn dies über ein öffentliches Telefonnetz (PSTN) realisiert ist.

Während einer Sitzung (Session) eines Benutzers kann dieser über das Kommunikationsnetz zu verschiedenen Datenquellen (Internet Application Provider) Verbindung aufnehmen.
Dabei wird für die Datenpakete ein beliebiger Kommunikationspfad durch das Kommunikationsnetz gesucht. Dieser Kommunikationspfad kann aber für die von der Datenquelle angebotenen Daten und Dienste nicht von ausreichender Qualität sein.

Um dieses Problem zu lösen, ist es bislang notwendig, daß einer der Kommunikationsteilnehmer (zum Beispiel der Daten- oder Diensteanbieter) eine weitere Verbindung aufbaut. Eine Beeinflussung der Vergebührungsinformationen ist nicht möglich.
Weiterhin ist in der Regel zusätzliche Hard- und Software auf Seiten des Endnutzers notwendig.

Aufgabe der Erfindung ist es, eine Möglichkeit anzugeben, wie ein Benutzer während der Benutzung eines Netzzuganges temporär einen Umgehungsweg verwenden kann, unter Vermeidung der oben genannten Nachteile.
Weiterhin ist es eine Aufgabe der Erfindung, eine flexible Vergebührung für den Umgehungsweg anzubieten welche von der Vergebührung des ersten Datenpfades unabhängig gesteuert wird.

Diese Aufgabe wird gelöst durch ein Verfahren gemäß Patentanspruch 1.

Die Lösung sieht dabei vor, daß ein Netzsteuerungssystem existiert, welches die Anforderungen der Kommunikationsteilnehmer entgegennimmt und bearbeitet. Stellt einer der Kommunikationsteilnehmer den Bedarf eines Umgehungsweges fest, so meldet er dies an das Netzsteuerungssystem. Dieses benötigt zumindest die Informationen, zwischen welchen Netzzugangspunkten der Umgehungspfad aufgebaut werden soll und unternimmt weitere Maßnahmen.

Vorteilhafte Ausgestaltungen und Weiterbildungen sind in den Unteransprüchen angegeben.

Die erfindungsgemäße Lösung ist insbesondere vorteilhaft, wenn der von dem Netzsteuerungssystem initiierte Umgehungspfad ein zweites Kommunikationsnetz benutzt, das verschieden ist von dem ersten Kommunikationsnetz, durch welches der ursprüngliche erste Kommunikationspfad läuft. Dann ist es zum Beispiel möglich, auch dann Datenverbindungen mit einer sehr hohen Übertragungsrate aufzubauen, wenn das erste Kommunikationsnetz aufgrund hoher Auslastung nur noch eine sehr geringe Datenrate erreicht (Anspruch 2).

Eine denkbare Anwendung der Erfindung ist die Übertragung von sehr großen Datenmengen in kurzer Zeit. Dies ist zum Beispiel der Fall bei Videokonferenzen oder sonstigen Übertragungen von Multimedia-Daten wie Video. Daher ist ein sinnvolles Kriterium für die Anforderung eine Umgehungsverbindung die erwartete benötigte Bandbreite für die Datenübertragung. Zur Beurteilung kann dabei auch die aktuelle Auslastung des ersten Kommunikationsnetzes herangezogen werden (Anspruch 3).

Insbesondere wenn der zweite Kommunikationspfad durch ein zweites Kommunikatiosnetz führt, ist es sinnvoll, wenn für die zweite Kommunikationsverbindung andere Benutzungsparameter verwendet werden. (Anspruch 4). Dies ist im speziellen für die Vergebührungsinformation interessant. Da der Benutzer bereits für den ersten Kommunikationspfad bezahlen muß, kann es gewünscht sein, daß die zusätzlich anfallenden Kosten für den zweiten Kommunikationspfad von dem Daten- oder Diensteanbieter übernommen werden. Auch eine Gebührenteilung kann dabei beliebig zwischen den Kommunikationsteilnehmern erfolgen (Anspruch 5).

Da der Aufbau einer zweiten Kommunikationsverbindung mit zusätzlichen Kosten verbunden ist, ist es vorteilhaft, wenn eine unerwünschte Nutzung einer zweiten Kommunikationsverbindung unterbunden werden kann. Dem Netzsteuerungssystem stehen neben den Daten, die ihm bei einer Anforderung übermittelt werden, noch weitere Teilnehmer-Informationen gespeichert zur Verfügung. Aufgrund dessen kann das Netzsteuerungssystem prüfen, ob der angeforderte Verbindungsaufbau zulässig ist, also der Benutzer steht auf einer Liste von zugelassenen Teilnehmer ("White List") bzw. er steht nicht auf einer sogenannten "Blacklist", also auf einer Liste der von dem Verfahren auszuschließenden Teilnehmer (Anspruch 6).

Es sind zumindest zwei mögliche Vorgehensweisen denkbar:
⇒ Nachdem der Bedarf von einem der Kommunikationsteilnehmer festgestellt wurde, wird er an einen Netzsteuerungssystem mitgeteilt. Dieses fordert ein vermittelndes Netzelement in dem zweiten Kommunikationsnetz dazu auf, eine Verbindung herzustellen zwischen dem auffordernden und dem zweiten Kommunikationsteilnehmer (Anspruch 7).
⇒ Nachdem der Bedarf von einem der Kommunikationsteilnehmer festgestellt wurde, wird er an ein Netzsteuerungssystem mitgeteilt. Dieses richtet dann einen neue Nummer für den zweiten Kommunikationsteilnehmer ein und schaltet sie frei. Diese kann auch von dem ersten Kommunikationspfad unterschiedliche Parametereinstellungen haben, zum Beispiel die Art und Weise der Vergebührung. Diese Nummer wird dem ersten Kommunikationsteilnehmer mitgeteilt, der dann einen zweiten Kommunikationspfad eröffnen indem er diese Nummer anwählt (Anspruch 8). Es ist vorteilhaft, wenn diese Nummer nur temporär zugeteilt und nach Ende der Verbindung wieder für den Gebrauch gesperrt wird (Anspruch 9). So kann Mißbrauch der beschriebenen Mechanismem verhindert werden.

Im folgenden wird die Erfindung anhand von Ausführungsbeispielen erläutert. Dabei zeigen
- Figur 1: ein Vorgehen, bei dem der zweite Kommunikationspfad von einem Vermittlungsknoten aus zu beiden Kommunikationsteilnehmern aufgebaut wird, und
- Figur 2: die Realisierung mittels temporärer Einrichtung einer (für den Benutzer) "gebührenfreien" Nummer durch ein Netzsteuerungssystem.

Einschränkungen in den Figuren und Ausführungsbeispielen sind für die Erfindung nicht zwingend.

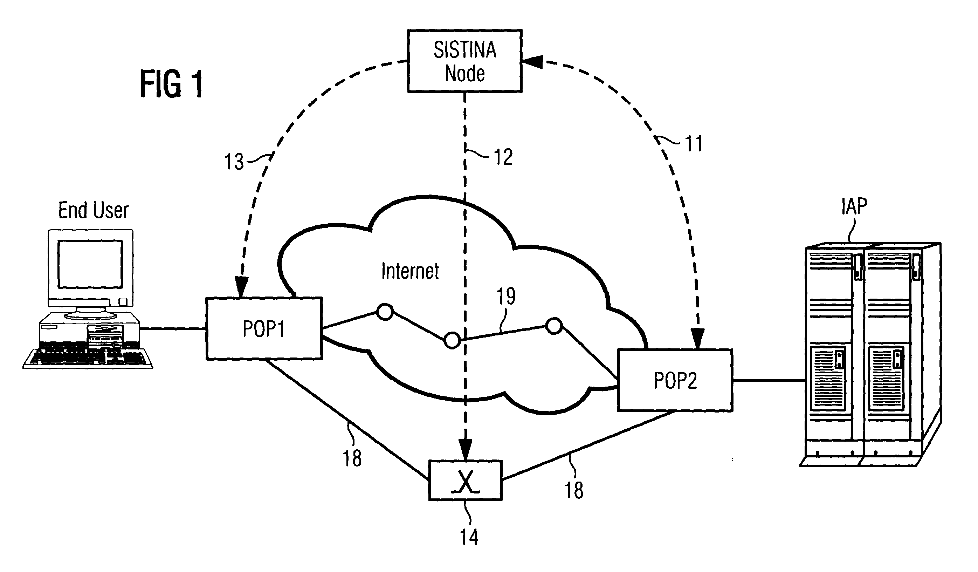

In Figur 1 ist eine erste Realisierungsmöglichkeit des erfindungsgemäßen Vorgehens aufgezeichnet. Der erste Kommunikationsteilnehmer (End User) links baut eine Verbindung auf zu dem zweiten Kommunikationsteilnehmer IAP (Internet Application Provider) rechts. Dies geschieht durch einen Verbindungsaufbau zu einem ersten Netzzugangspunkt POP1, über einen Kommunikationspfad 19 durch das erste Kommunikationsnetz Internet und einen zweiten Netzzugangspunkt POP2.

Über diesen Kommunikationspfad läuft die gesamte Kommunikation (Datenpakete und/oder leitungsvermittelt).
Sobald ein Kommunikationsteilnehmer den Bedarf eines zweiten Kommunikationspfades erkennt, leitet er eine Mitteilung 11 an das Netzsteuerungssystem SISTINA. Dies kann zum Beispiel der Fall sein, wenn der Benutzer End User eine Übertragung von größeren Datenmengen, also etwa Multimedia Daten, eine Videokonferenz oder ähnliches anfordert. Dann reichen die aktuell angeforderten Datenübertragungskapazitäten in der Regel nicht aus.
Mit der Mitteilung 11 kann das Netzsteuerungssystem SISTINA auch aufgefordert werden, anhand von ihm bekannten Daten über die beiden Kommunikationspartner zu überprüfen, ob ein derartiger weiterer Verbindungsaufbau gestattet wird, und welche Parameter anzuwenden sind.
Das Netzsteuerungssystem SISTINA fordert darauf hin eine Vermittlungsstelle 14, welche sich in diesem Fall in einem von dem ersten Kommunikationsnetz verschiedenen Netz befindet, dazu auf über 12, eine Verbindung zwischen dem ersten Kommunikationsteilnehmer End User und dem zweiten Kommunikationsteilnehmer IAP herzustellen.
Dem ersten Kommunikationsteilnehmer kann gegebenenfalls benötigte Wegewahlinformation übermittelt werden, 13. Die Vermittlungsstelle 14 baut dann zu beiden Kommunikationsteilnehmern den gewünschten Datenpfad 18 auf.

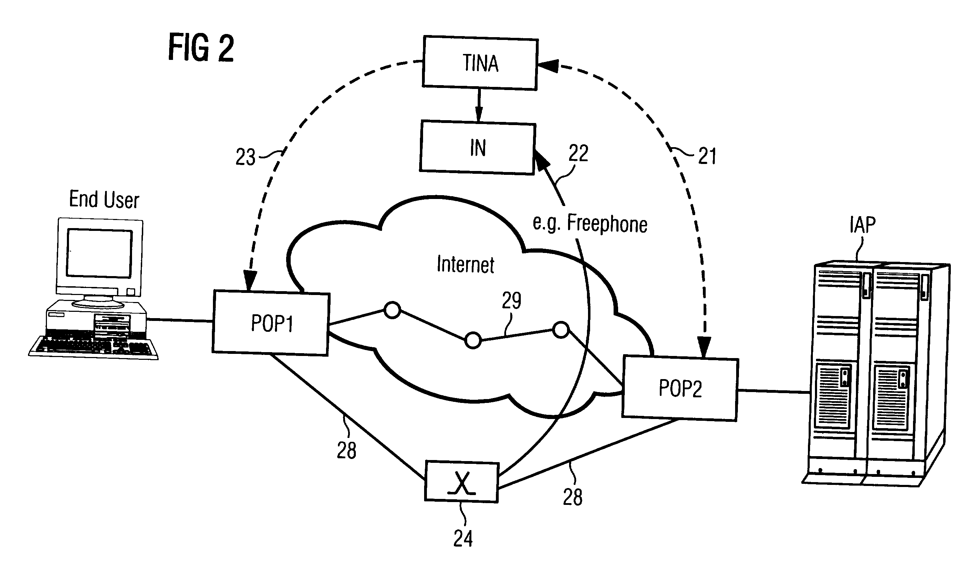

In Figur 2 wird eine weitere Realisierungsmöglichkeit des erfindungsgemäßen Verfahrens beschrieben.
Die Ausgangssituation ist identisch zu Figur 1. Der erste Kommunikationsteilnehmer (End User) links baut eine Verbindung auf zu dem zweiten Kommunikationsteilnehmer IAP (Internet Application Provider) rechts. Dies geschieht durch einen Verbindungsaufbau zu einem ersten Netzzugangspunkt POP1, über einen Kommunikationspfad 29 durch das erste Kommunikationsnetz Internet und einen zweiten Netzzugangspunkt POP2.

Über diesen Kommunikationspfad läuft die gesamte Kommunikation (Datenpakete und/oder leitungsvermittelt).
Sobald ein Kommunikationsteilnehmer den Bedarf eines zweiten Kommunikationspfades erkennt, leitet er eine Mitteilung 21 an das Netzsteuerungssystem TINA. Auch hier kann dies die vorherige Überprüfung der beiden Kommunikationsteilnehmer und der Zulässigkeit eines weiteren Verbindungsaufbaus zur Folge haben.
Als Reaktion auf eine zulässige Anforderung wird ein temporärer Zugangscode für den zweiten Kommunikations von IN eingerichtet, und/oder freigeschaltet und gemeldet:
⇒ an den ersten Kommunikationspartner POP1, 23, um ihn über den neuen Zugriffscode zu informieren und
⇒ eine Rückmeldung an den zweiten Kommunikationspartner POP2, 21.

Der erste Kommunikationspartner kann nun den Zugangscode anwählen und der Vermittlungsknoten 24 stellt den zweiten Datenpfad 28 durch. Dabei kann er bei Eintreffen des Verbindungswunsches Rückfrage 22 an das Netzsteuerungssystem stellen, bezüglich der Zieladresse, Vergebührung und so weiter. Nach Beendung der Verbindung kann die beteiligten Nummer wieder durch das Netzsteuerungssystem gesperrt werden.

Diese Variante ist notwendig, wenn die Verbindung nicht, wie in Figur 1 beschrieben, von dem beteiligten Vermittlungsknoten 24 zwischen POP1 und POP2 aufgebaut werden kann.

Eine Realisierungsmöglichkeit des zentralen Netzsteuerungssystems besteht in der Architektur der Intelligenten Netze, welche derzeit vor allem im Festnetz- und Mobilnetzbereich angewendet wird. Diese Architektur ist dem Fachmann aus den Schriften der ITU Q.1200 ff. bekannt. Eine Anwendung dieser Architektur auf andere Kommunikations- und Datennetze ist denkbar.

### Abkürzungsverzeichnis

- IAP: Internet Application Provider
- IN: Intelligent Network
- ITU: International Telecommunication Union
- POP: Point of Presence
- PSTN: public switched telephone network; öffentliches Fernsprechwählnetz
- SISTINA: Solutions for Integrated Services à la TINA
- TINA: Telecommunication Intelligent Network Architecture

## Patentansprüche

1. Verfahren zum Übertragen von Daten über ein erstes Kommunikationsnetz (Internet)
zwischen einem ersten Kommunikationsteilnehmer (End User),
über einen ersten Netzzugangspunkt (POP1) und einen zweiten Netzzugangspunkt (POP2), und einem zweiten Kommunikationsteilnehmer (IAP)
über einen ersten Kommunikationspfad (19, 29)
wobei ein zweiter Kommunikationspfad (18, 28) zwischen dem ersten Kommunikationsteilnehmer (End User) und dem zweiten Kommunikationsteilnehmer (IAP) von einem Netzsteuerungssystem (TINA, SISTINA) ermittelt wird,
sobald ein Bedarf von einem der Netzteilnehmer signalisiert wird, und
weitere Daten über diesen zweiten Kommunikationspfad übertragen werden.

2. Verfahren nach Patentanspruch 1,
dadurch gekennzeichnet, daß
sich der zweite Kommunikationspfad in einem von dem ersten Kommunikationsnetz verschiedenen Kommunikationsnetz befindet.

3. Verfahren nach einem der vorherigen Patentansprüche,
dadurch gekennzeichnet, daß
ein Bedarf signalisiert wird, sobald für die Datenübertragung eine von der bei dem ersten Kommunikationspfad verschiedenen Bandbreite benötigt wird.

4. Verfahren nach einem der vorherigen Patentansprüche,
dadurch gekennzeichnet, daß
für die Benutzung des zweiten Kommunikationspfades (18) zwischen dem ersten Kommunikationsteilnehmer (End User) und dem zweiten Kommunikationsteilnehmer (IAP) andere Benutzungsparameter eingestellt sind also für den ersten Kommunikationspfad (19).

5. Verfahren nach Patentanspruch 4,
dadurch gekennzeichnet, daß
die Benutzungsparameter die Vergebührung betreffen.

6. Verfahren nach einem der vorherigen Patentansprüche,
dadurch gekennzeichnet, daß
vor der Ermittlung des zweiten Kommunikationspfades (18) zwischen dem ersten Kommunikationsteilnehmer (End User) und dem zweiten Kommunikationsteilnehmer (IAP) eine Zulässigkeitsprüfung des zweiten Verbindungsaufbaues durchgeführt wird.

7. Verfahren nach einem der vorherigen Patentansprüche,
dadurch gekennzeichnet, daß
nach Feststellung des Bedarfes eines zweiten Kommunikationspfades
ein Netzsteuerungssystem (SISTINA Node) einem vermittelnden Netzelement (14) eine Nachricht sendet,
und dieses vermittelnde Netzelement die gewünschte Verbindung (18, 28) zwischen dem ersten Kommunikationsteilnehmer (End User) und dem zweiten Kommunikationsteilnehmer (IAP) herstellt.

8. Verfahren nach einem der Patentansprüche 1 bis 5,
dadurch gekennzeichnet, daß
nach Feststellung des Bedarfes eines zweiten Kommunikationspfades
a)ein Netzsteuerungssystem (TINA, IN) dem Netzzugangspunkt (POP2) des zweiten Kommunikationsteilnehmers (IAP) oder dem zweiten Kommunikationsteilnehmer selber (IAP) einen Zugangscode zuteilt (21), und
b)diesen Zugangscode dem ersten Kommunikationsteilnehmer (End User) oder dem Netzzugangspunkt (POP1) des ersten Kommunikationsteilnehmers mitteilt (23), und
c)der erste Kommunikationsteilnehmer (End User) oder der Netzzugangspunkt (POP1) des ersten Kommunikationsteilnehmers dann eine Verbindung mittels des Zugangscodes aufbaut.

9. Verfahren nach Patentanspruch 7,
dadurch gekennzeichnet, daß
der Zugangscode temporär zugeteilt und nach dem Verbindungsabbau für weitere Benutzung gesperrt wird.
